# EUROPEAN PATENT APPLICATION

(11) **EP 3 372 417 A1**
(43) Date of publication of application: **12.09.2018**
(21) Application number: 16827297.9
(22) Date of filing: 03.06.2016
(51) Int. Cl.: B41M 1/26, A23L 19/18

(54) **METHOD FOR PRODUCING PERSONALISED CRISPS**

(30) Priority: 22.07.2015 ES 201531084; 31.03.2016 ES 201630383
(71) Applicant: Salcedo Torredeflot, Anna, 08251 Santpedor-Barcelona (ES)
(72) Inventor: Salcedo Torredeflot, Anna, 08251 Santpedor-Barcelona (ES)
(74) Representative: González-Mogena González, Inigo
(86) International application number: PCT/ES2016/070418
(87) International publication number: WO 2017/013286

(57) **Abstract**

The invention relates to a method for producing personalised crisps by means of an image printed with edible inks on edible wafers, the most novel steps of the method being the printing of an image on wafers and the subsequent stamping thereof, and the placing of said images superimposed on the slices of potato before they are fried. Optionally, the printing with edible inks can be carried out directly on the slices of potato before they are fried.

## Description

### Object of invention

The purpose of the invention is a novel process for preparing potato crisps, also known as chips, personalised with a printed image and the potato crisps prepared using said procedure.

### Background of invention

As is well known, crisps are potatoes sliced into fine slices and fried in abundant oil. There is currently a wide range of different types in terms of texture, thickness, size, cross-sectional shape, for example crinkle-cut chips. Furthermore, a multitude of different flavours are available, all of the above with the aim of enabling consumers to choose from different types and not be bored by consuming just one variety.

On the other hand, there is a trend in marketing and merchandising towards personalising products by incorporating different characteristics into the same base product to facilitate its sale to different market segments. Examples of this type of product include wristwatches with the crests of football or Formula 1 teams or tarts with a specific image on the surface.

This invention advocates a novel procedure for including an image on potato crisps.

### Description of invention

The procedure for producing personalised potato crisps that is the object of this invention consists of the following steps:
a) Printing on edible wafers of a predetermined image with edible inks.
b) Stamping of each image with a predetermined shape.
c) Separation of each image
d) Loading of potatoes into storage hopper.
e) Peeling of potatoes.
f) Washing of peeled potatoes
g) Inspection of washed potatoes and rejection of washed potatoes that not suitable for the process.
h) Cutting of washed potatoes into slices.
i) Washing of potato slices.
j) Separation of each washed potato slice.
k) An image is placed on each washed potato slice.
l) The image is stamped on each potato slice.
m) The potato slices are fried with their corresponding superimposed images to obtain the personalised crisps.
n) Inclusion of a predetermined flavour in the personalised crisps.
o) Packaging of the personalised crisps with a predetermined flavour.

### Preferred embodiments

A preferred embodiment of this invention is described below. The preparation procedure for personalised potato crisps consists of the following steps:
a) Printing of a predetermined image with edible inks on edible wafers, for example in a printer for use in the food industry.
b) Stamping of each image with a predetermined shape, the stamping should preferably be carried out with the outline of the image shape. Evidently several printed wafers can be stacked on top of each other prior to stamping to reduce costs and increase production.
c) Separation of each stamped image.
d) Loading of potatoes into storage hopper.
e) Peeling of potatoes.
f) Washing of peeled potatoes.
g) Inspection of washed potatoes and rejection of washed potatoes that are not suitable for the process.
h) Cutting of washed potatoes into slices.
i) Washing of potato slices.
j) Separation of each washed potato slice.
k) An image is placed on each washed potato slice.
l) The image is stamped on each potato slice.
m) Stamping of the potato slice with the superimposed image.
n) The potato slices are fried with their corresponding superimposed images to obtain the personalised crisps.
o) Inclusion of a predetermined flavour in the personalised crisps.
p) Packaging of the personalised crisps with a predetermined flavour.

In another preferred embodiment of this invention, the printing with edible inks of a predetermined image is carried out on edible wafers in order to reduce costs. In this second preferred embodiment the procedure for preparing the personalised crisps consists of the following stages:
a) Loading of the potatoes into a storage hopper.
b) Peeling of potatoes.
c) Washing of peeled potatoes.
d) Inspection of washed potatoes and rejection of the washed potatoes that are not suitable for the process.
e) Cutting of washed potatoes into slices of a predetermined shape.
f) Washing of potato slices.
g) Separation of each washed potato slice.
h) Printing with edible inks of a predetermined image on each washed potato slice by means of an industrial printer used in the food industry.
i) Drying of printed potatoes.
j) The potato slices are fried with their corresponding superimposed images to obtain the personalised crisps.
k) Inclusion of a predetermined flavour in the personalised crisps.
l) Packaging of the personalised crisps with a predetermined flavour.

This process obtains novel personalised crisps with a predetermined flavour that can be used to reach different market segments and as an advertising element for products or services that can be identified by means of a given image that can be a given figure or message or a mixture of same.

## Claims

1. Personalised crisp preparation process **characterised in that** it consists of the following stages:
a) Loading of the potatoes into a storage hopper.
b) Peeling of potatoes.
c) Washing of peeled potatoes.
d) Inspection of washed potatoes and rejection of the washed potatoes that are not suitable for the process.
e) Cutting of washed potatoes into slices of a predetermined shape.
f) Washing of potato slices.
g) Separation of each washed potato slice.
h) Printing with edible inks of a predetermined image on each washed potato slice by means of one or more industrial printers used in the food industry.
i) Drying of the printed potato slices.
j) The potato slices are fried with their corresponding superimposed images to obtain the personalised crisps
k) Inclusion of a predetermined flavour in the personalised crisps.
l) Packaging of the personalised crisps with a predetermined flavour.

2. Process for preparing personalised crisps, as per claim 1, **characterised in that** the printing is carried out on edible wafers and consists of the following stages:
a) Printing on edible wafers of a predetermined image with edible inks.
b) Stamping of each image with the predetermined shape.
c) Separation of each image.
d) Loading of the potatoes into the storage hopper.
e) Peeling of the potatoes.
f) Washing of the peeled potatoes.
g) Inspection of the washed potatoes and rejection of the washed potatoes that are not suitable for the process.
h) Cutting of the washed potatoes into slices.
i) Washing of the potato slices.
j) Separation of each washed potato slice.
k) A stamped image is placed on each washed potato slice.
l) The stamped image is pressed onto each potato slice.
m) Frying of the potato slices with their corresponding superimposed images to obtain the personalised crisps.
n) Inclusion of a predetermined flavour in the personalised crisps.
o) Packaging of the personalised crisps with a predetermined flavour.

3. Process for preparing personalised crisps, as per claim 2, **characterised in that** the stamping of each image is carried out on the edge of said image.

4. Process for preparing personalised crisps, as per claim 2 or 3, **characterised in that** prior to the frying of the potato slices with their corresponding superimposed images, said slices are stamped with a predetermined shape.

## Amended claims

### Amended claims under Art. 19.1 PCT

**1.** Process for preparing personalised crisps **characterised in that** the printing of an image with edible inks is carried out on edible wafers and consists of the following stages:
a) Printing on edible wafers of a predetermined image with edible inks.
b) Stamping of each image with the predetermined shape.
c) Separation of each image.
d) Loading of potatoes in the storage hopper.
e) Peeling of the potatoes.
f) Washing of the peeled potatoes.
g) Inspection of the washed potatoes and rejection of the washed potatoes that are not suitable for the process.
h) Cutting of the washed potatoes into slices.
i) Washing of the potato slices.
j) Separation of each washed potato slice.
k) A stamped image is placed on each washed potato slice.
l) The stamped image is pressed on each potato slice.
m) Frying of the potato slices with their corresponding superimposed images to obtain the personalised crisps.
n) Inclusion of a predetermined flavour in the personalised crisps.
o) Packaging of the personalised crisps with a predetermined flavour.

**2.** Process for preparing personalised crisps, as per claim 1, **characterised in that** the stamping of each image is carried out on the edge of said image.

**4.** Process for preparing personalised crisps, as per claim 1 or 2, **characterised in that** prior to the frying of the potato slices with their corresponding superimposed images, said slices are stamped with a predetermined shape.
